(19) Europäisches Patentamt
European Patent Office
Office européen des brevets

(11) Veröffentlichungsnummer: **0 176 483**
**A2**

(12) # EUROPÄISCHE PATENTANMELDUNG

(21) Anmeldenummer: **85810427.6**

(22) Anmeldetag: **23.09.85**

(51) Int. Cl.[4]: **C 09 B 23/01**
G 03 C 1/12

(30) Priorität: **27.09.84 CH 4628/84**

(43) Veröffentlichungstag der Anmeldung:
**02.04.86 Patentblatt 86/14**

(84) Benannte Vertragsstaaten:
**BE CH DE FR GB IT LI NL**

(71) Anmelder: **CIBA-GEIGY AG**
**Klybeckstrasse 141**
**CH-4002 Basel(CH)**

(72) Erfinder: **Rohr, Thomas-Markus, Dr.**
**Ch. Forêt 15**
**CH-1723 Marly(CH)**

(72) Erfinder: **Boragine, Carlo, Dr.**
**Route de la Petite Fin 6**
**CH-1752 Villars-sur-Glâne(CH)**

(72) Erfinder: **Peter, Heinz, Dr.**
**Tulpenweg 5**
**CH-4310 Rheinfelden(CH)**

(54) **Cyaninfarbstoffe, Verfahren zur ihrer Herstellung und ihre Verwendung als Sensibilisatoren in photographischen Materialien.**

(57) Verbindungen der Formel

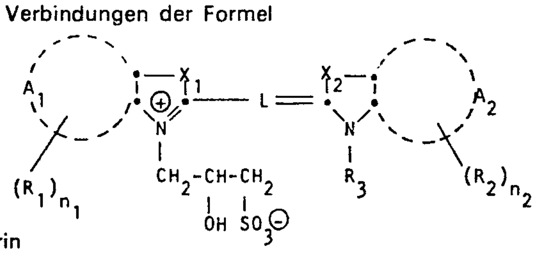

worin

$X_1$ und $X_2$ unabhängig voneinander $-CR_2-$, $-NR-$, $-O-$, $-S-$, $-Se-$, $-C_2H_4-$ oder $-C_2H_2-$ sind, L $-CH=$ oder $-CH=CR-CH=$, worin R Wasserstoff oder Alkyl mit 1 bis 4 Kohlenstoffatomen ist, $R_3$ Alkyl mit 1 bis 4 Kohlenstoffatomen, Benzyl oder $-CH_2CHOHCH_2SO_3^-$ ist, $A_1$ und $A_2$ unabhängig voneinander die zur Vervollständigung eines ungesättigten 5- oder 6-gliedrigen homo- oder heterocyclischen Ringes erforderlichen Atome darstellen, $R_1$ und $R_2$ unabhängig voneinander gegebenenfalls mit Halogen substituiertes Alkyl mit 1 bis 4 Kohlenstoffatomen, Alkoxy mit 1 bis 4 Kohlenstoffatomen, Phenyl, Cyano, Nitro oder Halogen, und $n_1$ und $n_2$ unabhängig voneinander 0, 1 oder 2 sind,

wobei $R_3$ nicht $-CH_2CHOHCH_2SO_3^{\ominus}$ ist, wenn $X_1$ und $X_2$ Schwefel sind, und $n_1$ verschieden von $n_2$ ist, wenn $X_1$ Schwefel und $X_2$ Selen ist, sind geeignet als Sensibilisatoren in photographischen Materialien.

EP 0 176 483 A2

0176483



CIBA-GEIGY AG
Basel (Schweiz)

Case 8-15086/=/TEL 241

# Cyaninfarbstoffe, Verfahren zu ihrer Herstellung und ihre Verwendung als Sensibilisatoren in photographischen Materialien

Die vorliegende Erfindung betrifft Cyaninfarbstoffe, Verfahren zu ihrer Herstellung und ihre Verwendung als Sensibilisatoren in photographischen Materialien.

Trimethincyaninfarbstoffe, die am Stickstoffatom des Heterocyclus durch einen Oxypropylsulfonsäurerest substituiert sein können, sind z.B. in DE-1.177.482 beschrieben.

Dieses Dokument betrifft auch ein Verfahren zur Herstellung solcher Cyaninfarbstoffe. Nach diesem Verfahren lassen sich jedoch nur Benzthiazol- und Benzselenazolcyanine herstellen, wodurch die möglichen Sensibilisierungsbereiche natürlich stark eingeschränkt werden. Ausserdem kann mit diesem Verfahren prinzipiell nur eine Ausbeute an Cyaninfarbstoff von höchstens 50 % erreicht werden.

Es wurde nun eine weitere Gruppe neuer Cyaninfarbstoffe mit N-Oxypropylsulfonsäuresubstituenten gefunden, die die Empfindlichkeit photographischer Silberhalogenidemulsionen wesentlich erhöhen können und sich deshalb zur Verwendung als Sensibilisatoren in photographischen Materialien besonders gut eignen.

Des weiteren wurde ein neues Verfahren zur Herstellung dieser Cyaninfarbstoffe gefunden, das sich vom Verfahren gemäss DE-1.177.482 durch deutlich mildere Reaktionsbedingungen und eine einfachere Isolierbarkeit der herzustellenden Zwischenprodukte unterscheidet.

Gegenstand der vorliegenden Erfindung sind somit neue Verbindungen der Formel

(1) 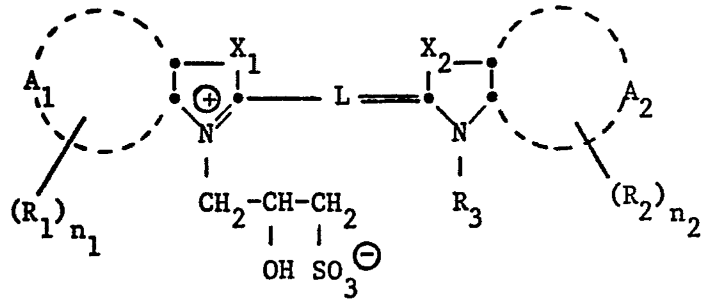 ,

worin

$X_1$ und $X_2$ unabhängig voneinander $-CR_2-$, $-NR-$, $-O-$, $-S-$, $-Se-$, $-C_2H_4-$ oder $-C_2H_2-$ sind, L $-CH=$ oder $-CH=CR-CH=$, worin R Wasserstoff oder Alkyl mit 1 bis 4 Kohlenstoffatomen ist, $R_3$ Alkyl mit 1 bis 4 Kohlenstoffatomen, Benzyl oder $-CH_2CHOHCH_2SO_3^{\ominus}$ ist, $A_1$ und $A_2$ unabhängig voneinander die zur Vervollständigung eines ungesättigten 5- oder 6-gliedrigen homo- oder heterocyclischen Ringes erforderlichen Atome darstellen, $R_1$ und $R_2$ unabhängig voneinander gegebenenfalls mit Halogen substituiertes Alkyl mit 1 bis 4 Kohlenstoffatomen, Alkoxy mit 1 bis 4 Kohlenstoffatomen, Phenyl, Cyano, Nitro oder Halogen, und $n_1$ und $n_2$ unabhängig voneinander 0, 1 oder 2 sind,

wobei $R_3$ von $-CH_2CHOHCH_2SO_3^{\ominus}$ verschieden ist, wenn $X_1$ und $X_2$ Schwefel sind, und $n_1$ verschieden von $n_2$ ist, wenn $X_1$ Schwefel und $X_2$ Selen ist.

Weitere Gegenstände der vorliegenden Erfindung sind die Verbindungen der Formeln

(2) 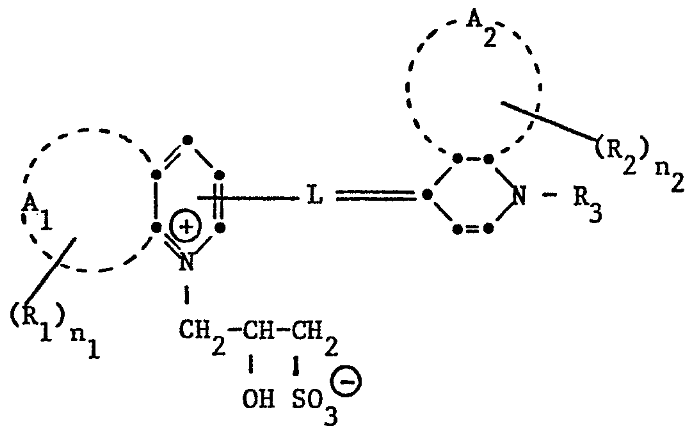 ,

worin

L $-CH=CR-CH=$, worin R Wasserstoff, Methyl oder Aethyl ist, $R_3$ Methyl oder Aethyl ist, $A_1$ und $A_2$ unabhängig voneinander die zur Vervollständigung eines ungesättigten 5- oder 6-gliedrigen homo- oder heterocyclischen Ringes erforderlichen Atome darstellen, $R_1$ und $R_2$ unabhängig voneinander Methyl, Phenyl, Chlor oder Trifluormethyl und $n_1$ und $n_2$ unabhängig voneinander 0, 1 oder 2 sind, und

(3) 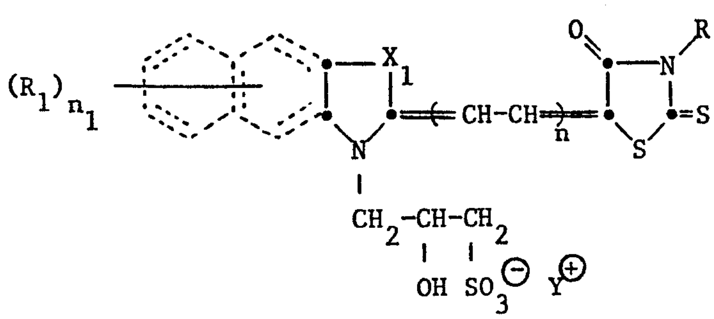 ,

worin

$X_1$ $-CR_2-$, $-NR-$ oder $-S-$, R Wasserstoff oder Alkyl mit 1 bis 4 Kohlenstoffatomen, $R_1$ Methyl oder Phenyl, $Y^{\oplus}$ ein Kation, $n_1$ 0, 1 oder 2 und n 0 oder 1 ist,

ferner Verfahren zur Herstellung von Verbindungen der Formeln (1) bis (3) und der hierfür notwendigen Zwischenprodukte, die Verwendung der erfindungsgemässen Verbindungen in photographischen Materialien sowie diese Verbindungen enthaltende photographische Materialien.

In den Verbindungen der Formel (1) bedeuten $X_1$ und $X_2$ unabhängig voneinander $-CR_2-$, -NR-, -O-, -S-, -Se-, $-C_2H_4-$ oder $-C_2H_2-$. R ist Wasserstoff oder Alkyl mit 1 bis 4 Kohlenstoffatomen wie z.B. Methyl, Aethyl, Propyl oder Butyl.

Das Brückenglied L ist ein Rest der Formel -CH= oder -CH=CR-CH=, worin R die angegebene Bedeutung hat.

$R_3$ bedeutet neben Alkyl mit 1 bis 4 Kohlenstoffatomen, wie z.B. Methyl, Aethyl, Propyl oder Butyl, Benzyl oder einen Oxypropylsulfonsäurerest der Formel $-CH_2CHOHCH_2SO_3^{\ominus}$.

$A_1$ und $A_2$ stellen unabhängig voneinander diejenigen Atome dar, die zur Vervollständigung von ungesättigten homo- oder heterocyclischen Ringen erforderlich sind. Solche Ringe sind z.B. Benzol- oder Naphtholringe sowie stickstoffhaltige, heterocyclische Aromaten wie Pyrazin oder Chinoxalin.

Die durch $A_1$ und $A_2$ vervollständigten Ringe können jeweils 1 oder 2 Substituenten enthalten. Hier kommen in Frage: Alkyl mit 1 bis 4 Kohlenstoffatomen, wie z.B. Methyl, Aethyl, Propyl oder Butyl, wobei diese Reste halogeniert sein können, wie z.B. Trifluormethyl und -äthyl sowie Trichlormethyl und -äthyl, ferner Alkoxy mit 1 bis 4 Kohlenstoffatomen, wie z.B. Methoxy, Aethoxy, Propoxy oder Butoxy, sowie Phenyl, Cyano, Nitro oder Halogen, wie z.B. Chlor oder Fluor.

Wenn $X_1$ und $X_2$ gleichzeitig Schwefel bedeuten, ist $R_3$ verschieden von $-CH_2CHOHCH_2SO_3^{\ominus}$. Wenn $X_1$ Schwefel und $X_2$ Selen bedeutet, ist $n_1$ verschieden von $n_2$.

0176483



Vorzugsweise sind in den Verbindungen der Formel (1) $A_1$ und $A_2$ unabhängig voneinander die zur Vervollständigung eines Benzol-, Naphthol-, Pyrazin- oder Chinoxalinringes erforderlichen Atome und $R_1$ und $R_2$ unabhängig voneinander Methyl, Trifluormethyl, Methoxy, Phenyl, Cyano, Nitro, Fluor oder Chlor, wobei $X_1$, $X_2$, L, $R_3$,$n_1$ und $n_2$ die angegebenen Bedeutungen haben.

In einer besonders geeigneten Gruppe von Verbindungen der Formel (1) sind $X_1$ und $X_2$ unabhängig voneinander Schwefel oder Selen, L ist ein Brückenglied der Formel -CH= oder -CH=CR-CH=, worin R Wasserstoff, Methyl oder Aethyl ist, $R_3$ ist Methyl, Aethyl oder $-CH_2CHOHCH_2SO_3^{\ominus}$, $A_1$ und $A_2$ bedeuten die zur Vervollständigung eines Benzolrestes notwendigen Atome, und $R_1$und $R_2$ sind jeweils Methyl. $n_1$ und $n_2$ haben die angegebene Bedeutung.

Den Verbindungen der Formeln

(101) 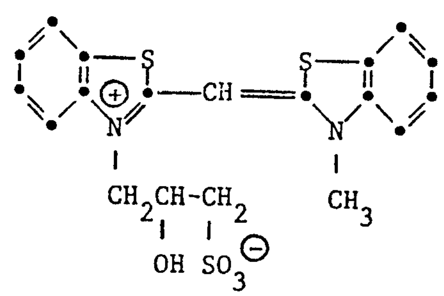 ,

(102) 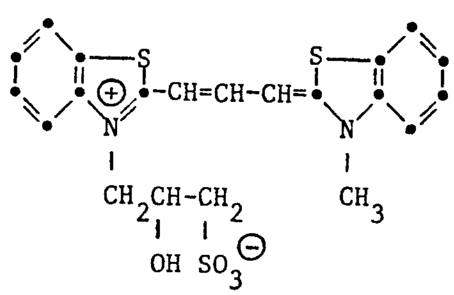 ,

(103) 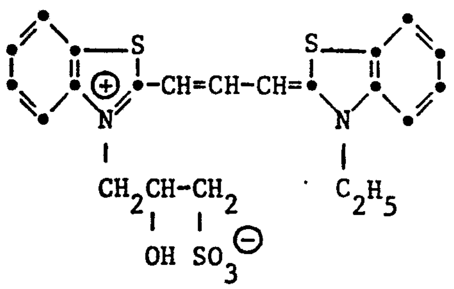 ,

(104) 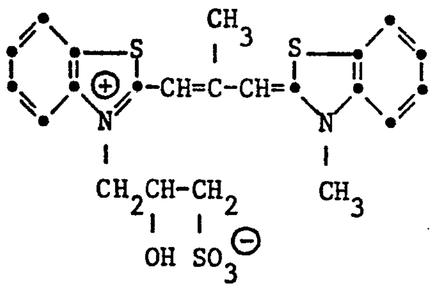 und

(105) 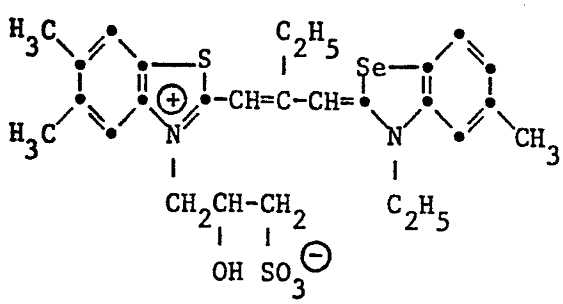 .

kommt besondere Bedeutung zu.

Eine weitere Gruppe bevorzugter Verbindungen der Formel (1) stellen solche Verbindungen dar, worin $X_1$ und $X_2$ unabhängig voneinander $-C(CH_3)_2-$, $-N(C_2H_5)-$ oder -O- sind, L -CH= oder -CH=CH-CH=, $R_3$ Aethyl oder $-CH_2CHOHCH_2SO_3^{\ominus}$ ist, $A_1$ und $A_2$ die zur Vervollständigung eines Benzolringes erforderlichen Atome darstellen, $R_1$ und $R_2$ Trifluormethyl, Phenyl oder Chlor sind, und $n_1$ und $n_2$ die angegebene Bedeutung haben.

Besonders geeignete Verbindungen der Formel (1) entsprechen den Formeln

(106) 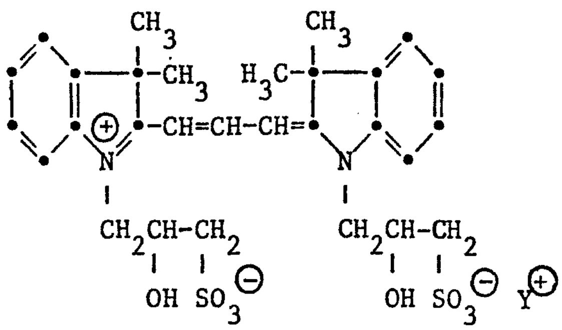 ,

(107) 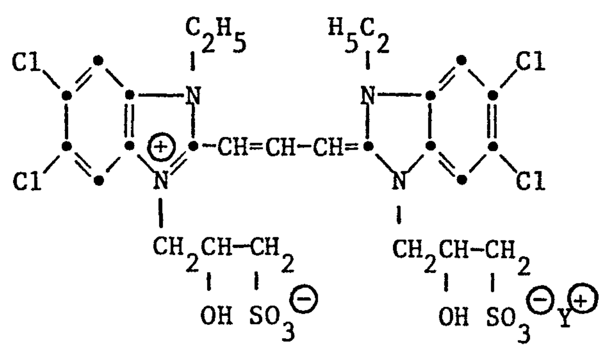 ,

worin Y Wasserstoff oder Natrium ist,

(108) 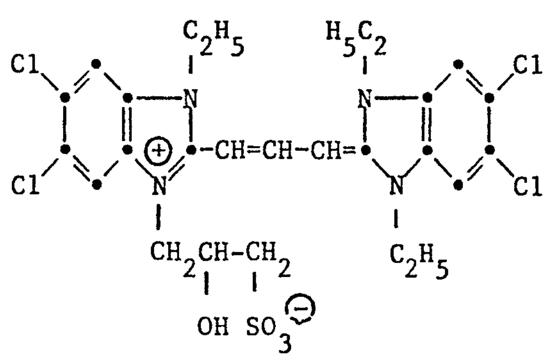 und

(109) 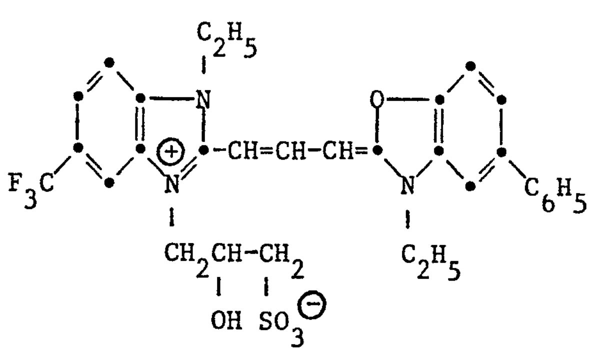 .

Bevorzugte Verbindungen der Formel (2) entsprechen den Formeln

(110) 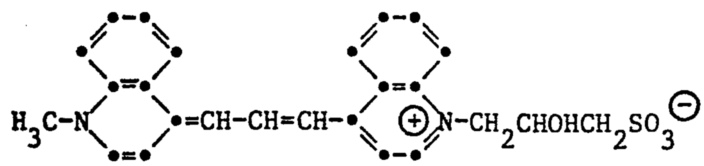 und

(111) 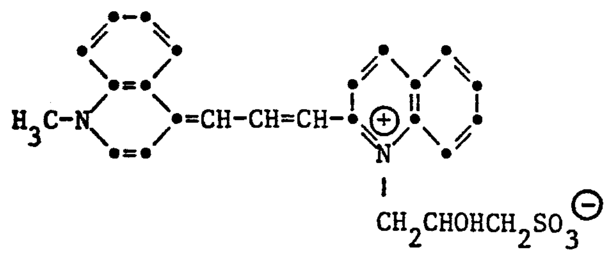 .

In den Verbindungen der Formel (3) ist $Y^{\oplus}$ ein Kation. Vorzugsweise bedeutet Y Wasserstoff, ein Alkalimetall, insbesondere Natrium, oder Ammonium. Von den Verbindungen der Formel (3) ist die Verbindung der Formel

(112) 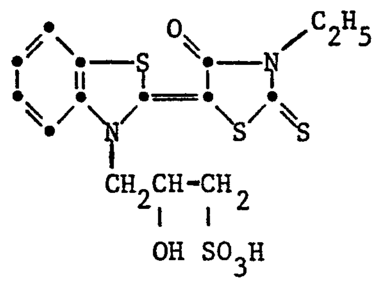

besonders bevorzugt.

Die Herstellung der Verbindungen der Formel (1) erfolgt in zwei Schritten. Zunächst werden die Verbindungen der Formel

(4) 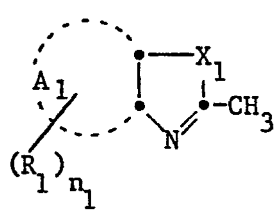 ,

worin $X_1$, $A_1$, $R_1$ und $n_1$ die angegebenen Bedeutungen haben, mit der Verbindung der Formel

(5) $ClCH_2-CHOH-CH_2SO_3Na$

quaterniert. Danach wird das Quaternierungsprodukt (Zwischenprodukt) mit den Verbindungen der Formel

(6) 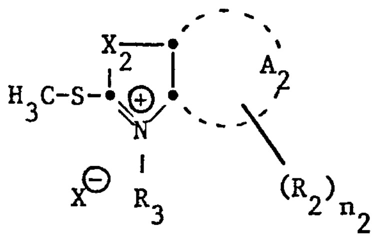 oder

(7) 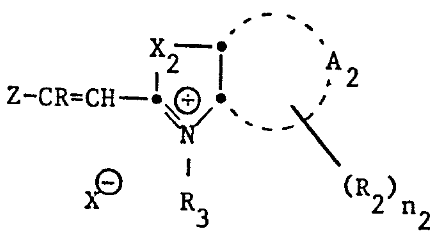 ,

worin $X_2$, $A_2$, R, $R_2$, $R_3$ und $n_2$ die angegebenen Bedeutungen haben und Z eine Abgangsgruppe und $X^{\ominus}$ ein Anion ist, zur Verbindung der Formel (1) umgesetzt.

Quaternierungen von Verbindungen der Formel (4) mit der Verbindung der Formel (5) lassen sich sowohl in Schmelze als auch in Lösung durchführen. Die Reaktionstemperaturen für Umsetzungen in Schmelze liegen vorzugsweise im Bereich von 170 bis 190°C.

Die Temperaturen für entsprechende Umsetzungen in Lösung liegen in der Regel um 20 bis 30°C tiefer, also im Bereich von 140 bis 170°C.

Als Lösungsmittel geeignet sind polare, aprotische Verbindungen, wie z.B. Nitrobenzol, Sulfolan, Methoxypropionitril.

Die direkte Verwendung von $ClCH_2CHOHSO_3Na$ als Quaternierungsmittel anstelle der entsprechenden in DE 1,177,482 beschriebenen freien Säure bringt Vorteile.

Das aus Epichlorhydrin und z.B. Natriumsulfit einfach zugängliche Natriumsalz der 3-Chlor-2-hydroxypropansulfonsäure kann ohne weitere Umwandlung direkt für die Quaternierungsreaktion eingesetzt werden.

Bei der Umsetzung der Verbindung der Formel (5) mit der Verbindung der Formel (4) entsteht Natriumchlorid,und die gesamte eingesetzte Menge der Verbindung der Formel (4) kann für die Quaternierungsreaktion genutzt werden.

Bei Verwendung der freien Säure gemäss DE 1,177,482 hingegen entsteht als Nebenprodukt Salzsäure. Da 50 % der eingesetzten Menge an Verbindung der Formel (4) zur Neutralisation dieser Säure verbraucht werden, können mit diesem Verfahren höchstens 50 % Ausbeute (bezogen auf eingesetzte Menge an Verbindung der Formel (4)) erreicht werden.

Weitere Vorteile dieses Verfahrens sind auch die deutlich niedrigeren Reaktionstemperaturen und die einfache Isolierbarkeit der erhaltenen Produkte.

Die weitere Umsetzung der Quaternierungsprodukte zu den Endprodukten wird in Lösungsmitteln wie z.B. Cyclohexanol, Propionitril, Butyronitril, Acetonitril, Dimethylformamid, Sulfolan, Chlorbenzol, Aethanol, n-Propanol, n-Butanol oder Pyridin in Gegenwart einer Base wie Triäthylamin, Triäthanolamin, Tributylamin oder Benzyldiäthylamin durchgeführt.

In analoger Weise können auch die Verbindungen der Formel (2) und (3) hergestellt werden.

Die Verbindungen der Formeln (1) bis (3) können photographischen Silberhalogenidemulsionen in bekannter Weise und in üblichen Mengen, d.h. zwischen 10 und 500 mg pro Mol Silberhalogenid zugesetzt werden. Sie sind zur spektralen Sensibilisierung der bekannten Emulsionstypen geeignet, wie sie z.B. in Research Disclosure, Dezember 1978, Nr. 17 643, Abschnitt I, Januar 1983, Nr. 22534 und August 1983, Nr. 23212, beschrieben sind . Die Silberhalogenidemulsionen können Farbkuppler oder auch Bildfarbstoffe für die verschiedenen farbphotographischen Verfahren enthalten. Neben ihrer guten sensibilisierenden Wirkung zeichnen sich die erfindungsgemässen Verbindungen auch dadurch aus, dass sie die Schichten, in denen sie enthalten sind, nicht anfärben.

## Beispiele

### Herstellungsvorschriften

Die Ausgangsverbindungen der Formeln (4) und (5) können nach bekannten Methoden hergestellt werden, wie sie z.B. in A. Weissenberger und E. Tylor, "The chemistry of heterocyclic compounds" beschrieben sind. Zur Quaternierung werden diese Verbindungen in der oben genannten Weise direkt in Schmelze oder in einem geeigneten Lösungsmittel miteinander umgesetzt.

Die in der folgenden Tabelle 1 aufgeführten Quaternierungsprodukte wurden hergestellt:

Tabelle 1:

| Verbindung der Formel | | $ClCH_2CHOHCH_2SO_3Na$ / Amin (mol / mol ) | Reaktions- Dauer (h) | Reaktions- Temp. (°C) | Aufarbeitung | Smp. (Zers.) (°C) | Ausbeute (%) |
|---|---|---|---|---|---|---|---|
| 201 | 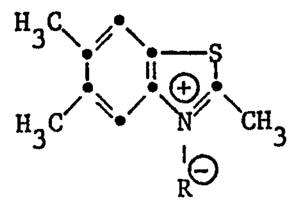 | 0.05/0.05 | 4 | 188 | in $C_2H_5OH$ lösen, klären, aus Aceton fällen | 220-230 | 23 |
| 202 | 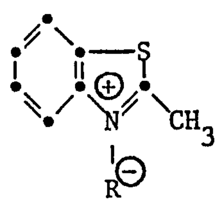 | 0.066/0.060 | 4 | 170 | aus $CH_3OH$ umkristallisieren | 240-243 | 45 |
| 203 | 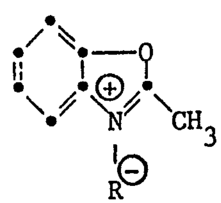 | 0.030/0.033 | 2.5 | 187 | in $(C_2H_5)_2O$ verreiben | 135-150 | 88 |

**Tabelle 1:** (Fortsetzung)

| Verbindung der Formel | $ClCH_2CHOHCH_2SO_3Na$ / Amin (mol / mol) | Reaktions- Dauer (h) | Reaktions- Temp. (°C) | Aufarbeitung | Smp. (Zers.) (°C) | Ausbeute (%) |
|---|---|---|---|---|---|---|
| 204 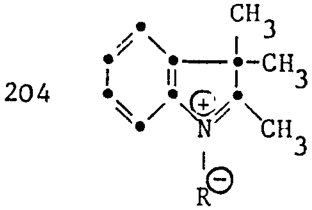 | 0.030/0.033 | 2 | 180 | in $CH_3OH$ lösen, aus $(C_2H_5)_2O$ fällen | 130-134 | 75 |
| 205 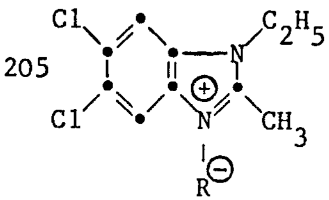 | 0.05/0.05 | 4 | 180 | -- *) | 285-295 | 95 |
| 206 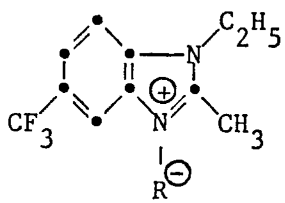 | 0.030/0.025 | 4 | 170 | -- *) | 240-250 | 70 |

*) als Rohprodukt weiterumgesetzt

Tabelle 1: (Fortsetzung)

| Verbindung der Formel | | $ClCH_2CHOHCH_2SO_3Na$ / Amin (mol / mol) | Reaktions- Dauer (h) | Reaktions- Temp. (°C) | Aufarbeitung | Smp. (Zers.) (°C) | Ausbeute (%) |
|---|---|---|---|---|---|---|---|
| 207 | 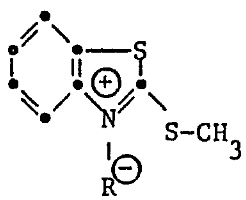 | 0.055/0.050 | 4 | 180 | -- *) | -- | -- |
| 208 | 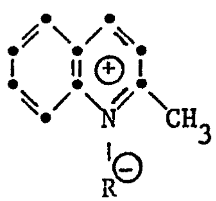 | 0.055/0.050 | 5 | 170 | -- **) | 85-90 | -- |
| 209 | 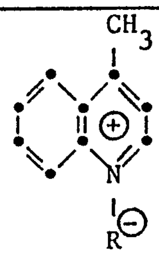 | 0.055/0.05 | 3 | 160-170 | umkristallisieren aus $CH_3OH/(C_2H_5)_2O$ | 220-235 | 82 |

$R^{\ominus} = CH_2CHOHCH_2SO_3^{\ominus}$

*) ohne Isolierung weiter umgesetzt
**) als Rohprodukt weiter umgesetzt.

Herstellungsbeispiele

Beispiel 1: 88,7 g (0,5 Mol) 2,5,6-Trimethylbenzthiazol und 113 g (0,55 Mol) 3-Chlor-2-hydroxypropansulfonsäure - Natriumsalz wurden in 200 ml Sulfolan suspendiert und das Reaktionsgemisch 19 Stunden bei 160°C gerührt. Anschliessend wurde die Reaktionslösung auf 80°C abgekühlt und 500 ml Acetonitril zugegeben. Der beim Abkühlen ausfallende Niederschlag wurde abgesaugt und getrocknet. Man erhielt 140 g Rohprodukt. Umkristallisation aus Wasser/Dioxan (1300 ml, Gemisch 1:2) ergab 60 g (38 %) der Verbindung der Formel (201). Der Schmelzpunkt betrug 287 bis 290°C (Zers.).

Beispiel 2: 5,7 g (25 mMol) 1-Aethyl-2-methyl-5-trifluormethylbenzimidazol und 5,9 g (30 mMol) 3-Chlor-2-hydroxy-propansulfonsäure-Natriumsalz wurden in 10 ml Sulfolan suspendiert und das Reaktionsgemisch 19 Stunden bei 160°C gerührt. Anschliessend wurde die Reaktionslösung auf 80°C abgekühlt und 25 ml Acetonitril zugetropft. Der beim Abkühlen ausfallende Niederschlag wurde abgesaugt und getrocknet. Man erhielt 9,5 g Rohprodukt. Umkristallisation aus Wasser/Aethanol (25 ml, Gemisch 7:3) ergab 6,7 g (63 %) der Verbindung der Formel (206). Der Schmelzpunkt betrug 292 bis 296°C (Zers.).

Beispiel 3:

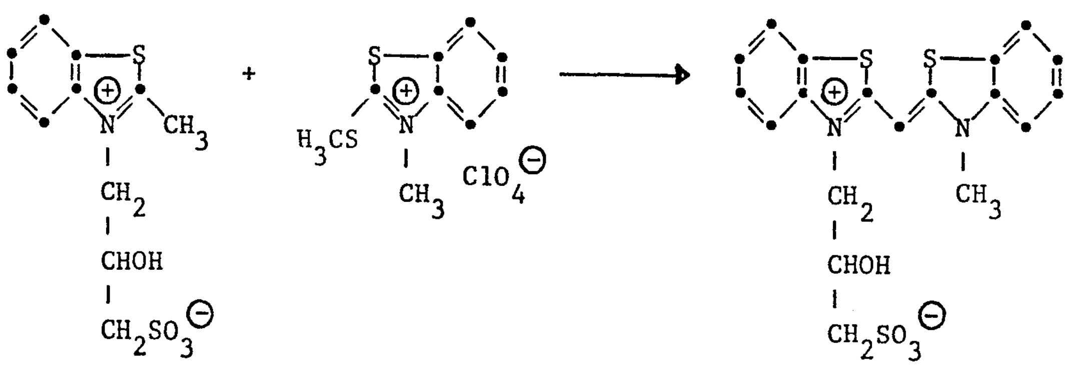

(202) (301) (101)

Je 0,025 m der Verbindungen der Formeln (202) und (301) wurden in 50 ml Pyridin in Gegenwart von 0,075 m Triäthylamin 2 Stunden unter Rückfluss gekocht. Das Reaktionsgemisch wurde abgekühlt und der Rückstand isoliert.

Man erhielt 4,15 g der Verbindung der Formel (101). Der Schmelzpunkt dieser Verbindung lag über 300°C.
$\lambda_{max}$ : 424 nm.

Die Werte für $\lambda_{max}$ wurden durch Messung einer Lösung der Verbindung der Formel (101) in Aethanol erhalten. In den folgenden Beispielen wurde ebenso verfahren.

<u>Beispiel 4:</u>

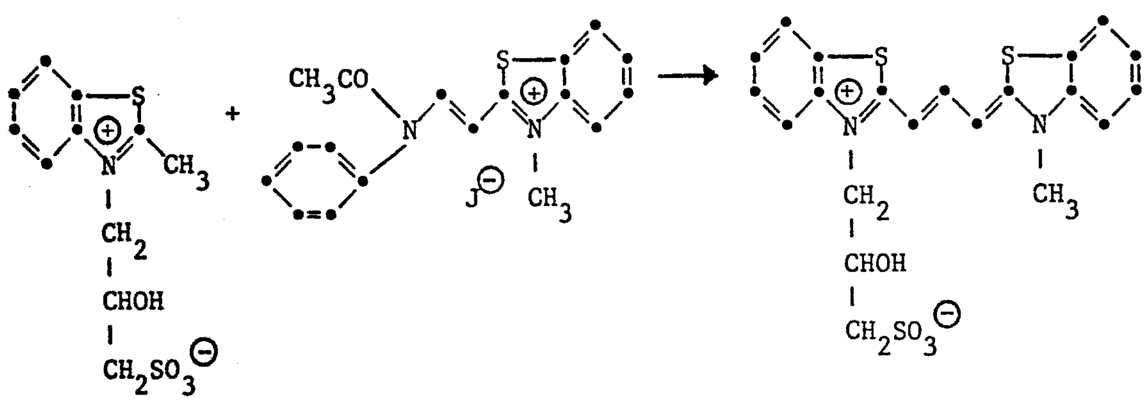

(202) (302) (102)

Je 0,0033 m der Verbindungen der Formeln (202) und (302) wurden in 50 ml Aethanol in Gegenwart von 0,006 m Triäthylamin 30 Minuten unter Rückfluss gekocht. Beim Abkühlen der Lösung auf -20°C fiel die Verbindung der Formel (102) als Rohprodukt an.

Nach Umkristallisieren aus Methanol wurden 0,2 g blaurote Kristalle vom Schmelzpunkt 230-240°C (Zers.) erhalten.
$\lambda_{max}$ : 557 nm.

Elementaranalyse:

| | C | H | N | S |
|---|---|---|---|---|
| gef.(%) | 53,21 | 4,98 | 5,59 | 18,03 |
| ber.(%) | 50,79 | 4,98 | 5,64 | 19,36 . |

Beispiel 5:

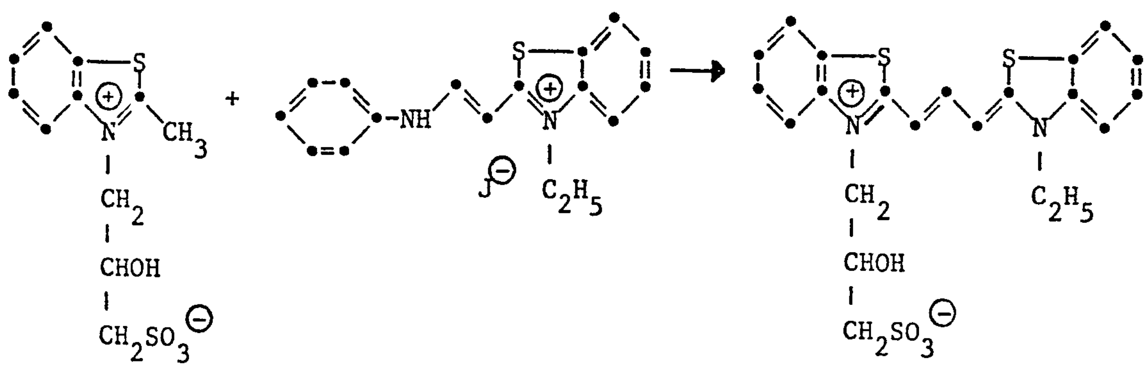

(202) (303) (103)

Die Verbindung der Formel (103) wurde wie die Verbindung der Formel (102) hergestellt.

Elementaranalyse:

| | C | H | N |
|---|---|---|---|
| gef.(%) | 55,68 | 4,67 | 5,90 |
| ber.(%) | 55,1 | 4,7 | 5,8 . |

Beispiel 6:

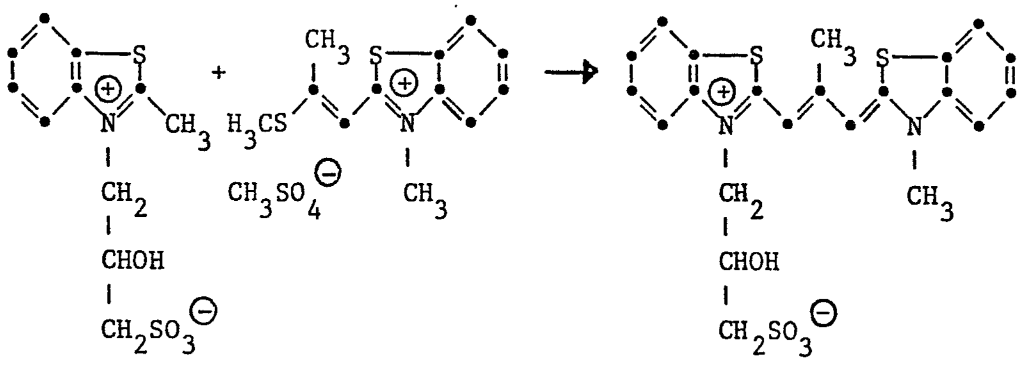

(202) (304) (104)

Je 0,025 m der Verbindungen der Formeln (202) und (304) wurden in 70 ml Pyridin in Gegenwart von 0,10 m Triäthylamin 30 Minuten unter Rückfluss gekocht. Nach Abkühlen des Reaktionsgemisches auf 0°C wurden 6,6 g Rohprodukt abgesaugt. Das Rohprodukt wurde in 200 ml Isopropanol 4 Stunden gekocht und heiss filtriert. Der Rückstand wurde in 1600 ml Aethylcellosolve gelöst, die heisse Lösung filtriert und das Filtrat nach Einengen auf 600 ml auf -20°C abgekühlt. Der Rückstand wird in 800 ml Methanol umkristallisiert. Es konnten 0,60 g violettes Pulver, Smp. 240-245°C, isoliert werden.

$\lambda_{max}$: 542 nm.

Elementaranalyse:

| | C | H | N | S |
|---|---|---|---|---|
| gef.(%) | 52,95 | 5,06 | 5,49 | 18,48 |
| ber.(%) | 54,53 | 5,17 | 5,53 | 18,98. |

Beispiel 7:

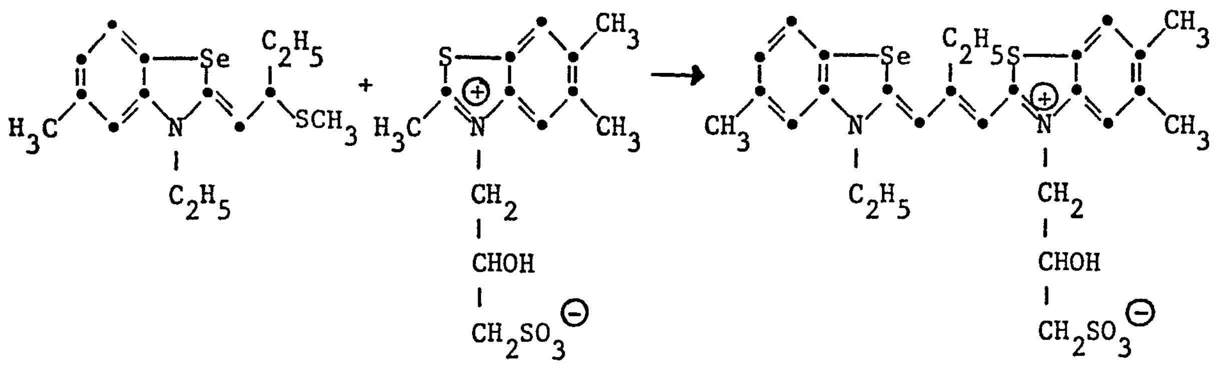

(305) (201) (105)

0,005m der Verbindung der Formel (201) wurden in 10 ml Aethanol und 9 ml Acetonitril durch Erwärmen gelöst, mit

0,005 m der Verbindung der Formel (305) in 10 ml Aethanol und 0,01 m Triäthylamin versetzt und 30 Minuten unter Rückfluss gekocht. Das Rohprodukt wurde mit 0,5 g Soda in 100 ml Wasser gefällt. Nach zweimaligem Umkristallisieren aus Methanol wurden 0,80 g violettes Pulver erhalten, Smp. 240-245°C. $\lambda_{max}$: 566 nm. Das Produkt ist hygroskopisch.

Elementaranalyse:

| | C | H | N | S |
|---|---|---|---|---|
| gef.(%) | 53,17 | 5,93 | 4,56 | 10,69 |
| ber.(%) | 53,19 | 5,62 | 4,56 | 10,52. |

Beispiel 8:

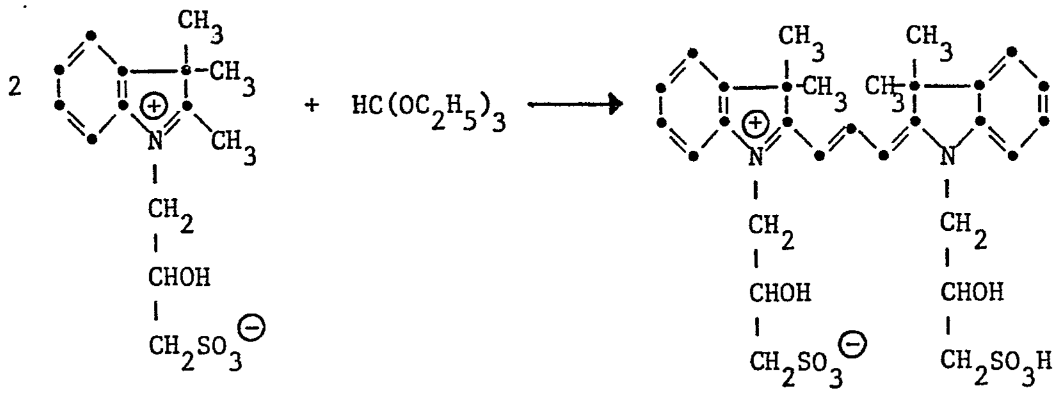


(204) (106)

0,005 m der Verbindung der Formel (204) und 0,015 m o-Ameisensäure-triäthylester wurden in 15 ml Pyridin 60 Minuten gekocht. Nach Abkühlen des Reaktionsgemisches auf -20°C erhielt man ein Rohprodukt, das aus Methanol umkristallisiert wurde. Man isolierte 0,27 g der Verbindung der Formel (106). $\lambda_{max}$ : 550 nm.

Beispiel 9:

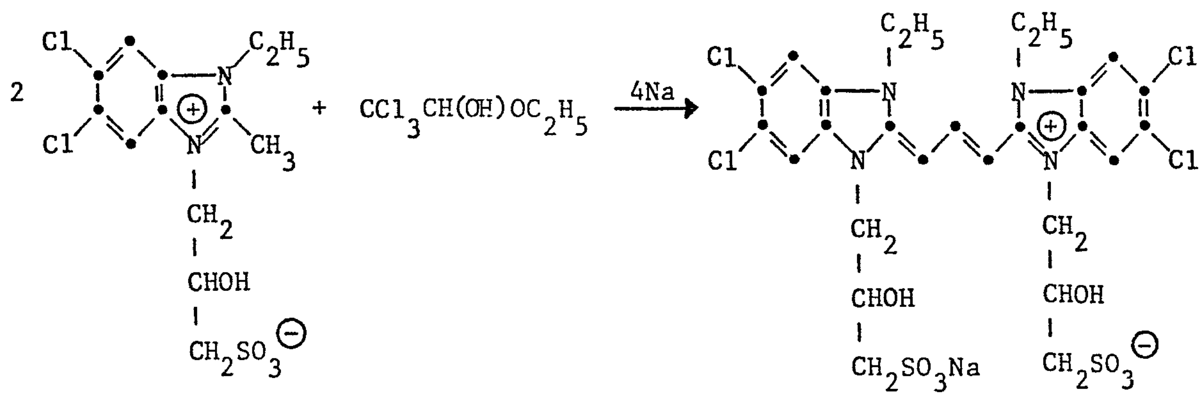


(205) (107)

Einer Lösung von 0,04 m Natrium in 80 ml Aethanol wurden 0,01 m der Verbindung der Formel (205) und 0,005 m Chloralalkoholat zugesetzt und das Reaktionsgemisch 1 Stunde unter Rückfluss erhitzt. Beim Abkühlen fielen 4,0 g Rohprodukt aus. Nach Umkristallisieren des Rohproduktes aus 500 ml Methanol wurden 1,3 g Produkt erhalten.

Dieses Produkt wurde umgefällt durch Lösen in mit Salzsäure angesäuertem Wasser und Wiederausfällen durch Natronlauge. Der Schmelzpunkt beträgt etwa 230°C. $\lambda_{max}$: 518 nm.

Elementaranalyse:

| | C | H | N | S |
|---|---|---|---|---|
| gef.(%) | 29,30 | 3,33 | 4,80 | 5,62 |
| ber.(%) | 28,68 | 3,30 | 4,95 | 5,67. |

Beispiel 10:

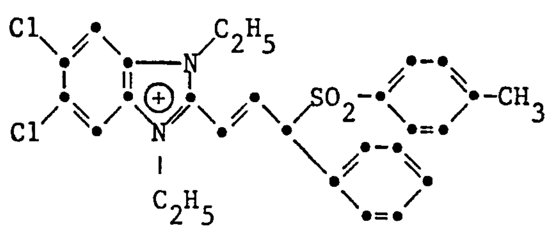

+

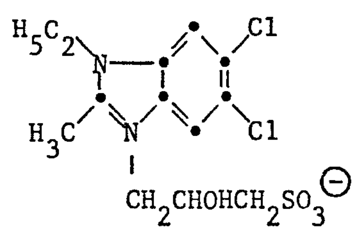

(306)

(205)

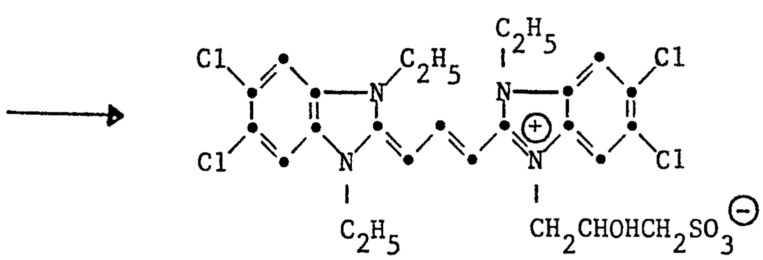

(108)

Je 0,01 m der Verbindungen der Formeln (205) und (306) wurden in 30 ml Pyridin in Gegenwart von 2,8 ml (0,02 m) Triäthylamin 1,5 Stunden unter Rückfluss gekocht. Mit 400 ml Diäthyläther wurde das Rohprodukt ausgefällt. Das Rohprodukt wurde in 2500 ml Aethanol 1 Stunde unter Rückfluss gekocht und heiss filtriert. Das Filtrat wurde auf -20°C abgekühlt. Der erhaltene Rückstand wurde in 200 ml Wasser suspendiert. Beim Ansäuern mit Salzsäure auf pH < 1 entstand eine farblose Lösung, aus der durch Neutralisieren mit Natronlauge das Produkt wieder ausfiel. Das Produkt wurde nochmals in heissem Wasser suspendiert. Man erhielt 1 g der Verbindung der Formel (108) vom Schmelzpunkt 292-294°C (Zers.). $\lambda_{max}$: 513 nm.

Elementaranalyse:

| | C | H | N | S | Cl |
|---|---|---|---|---|---|
| ber.(%) | 49,22 | 4,45 | 8,83 | 5,05 | 22,35 |
| gef.(%) | 48,81 | 4,82 | 8,75 | 5,12 | 22,28. |

Beispiel 11:

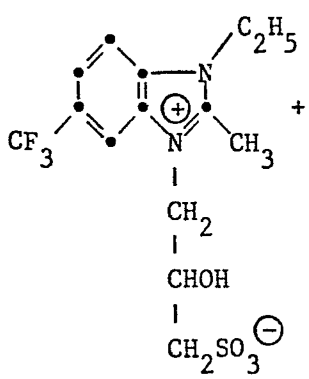

(206)

+

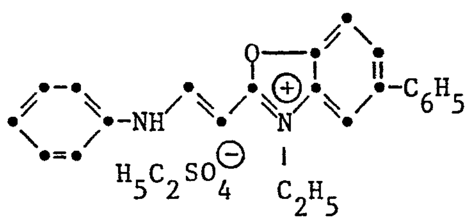

(307)

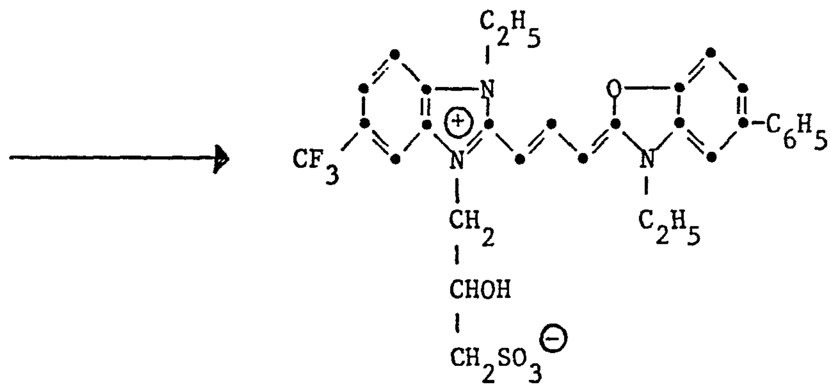

(109)

3,7 g (0,01 m) Verbindung der Formel (206) wurden in 70 ml Acetonitril unter Rückfluss teilweise gelöst, mit 70 ml Essigsäureanhydrid und anschliessend mit einer Lösung von 4,7 g (0,01 m) Verbindung der Formel (307) in 70 ml versetzt. Währenddessen wurden 4,6 g (0,045 m) Triäthylamin zugetropft. Nach 3 Stunden Kochen wurde das Reaktionsgemisch auf -20°C abgekühlt und der Niederschlag abgesaugt. Das Filtrat wurde auf 50 ml eingeengt, mit 400 ml Wasser und 100 ml 14%ige Sodalösung verdünnt, wobei 5,5 g Rohprodukt ausfielen. Dieses wurde zuerst in Wasser ausgekocht und dann zweimal in Aethanol umkristallisiert: 2,25 g Verbindung der Formel (109). Der Schmelzpunkt betrug 289-290°C (Zers.). $\lambda_{max}$: 487 nm.

Elementaranalyse:

| | C | H | N | S |
|---|---|---|---|---|
| gef.(%) | 59,97 | 5,10 | 6,29 | 4,93 |
| ber.(%) | 60,58 | 5,08 | 6,84 | 5,22 . |

Beispiel 12:

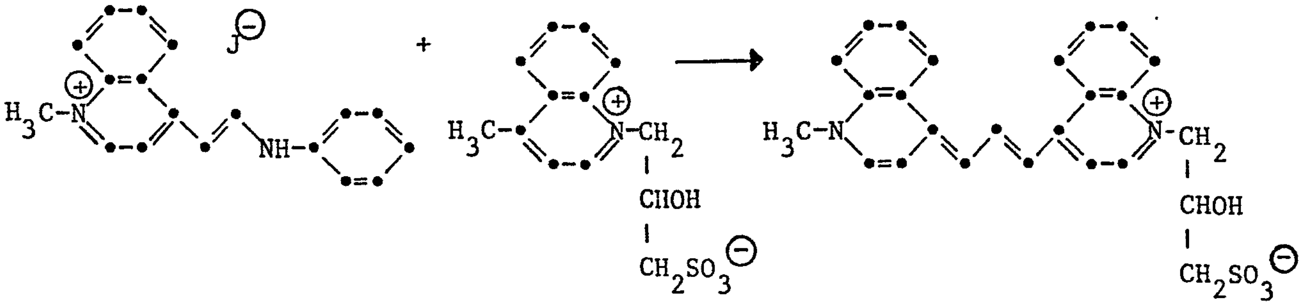

(308) (209) (110)

Je 0,005 m der Verbindungen der Formeln (209) und (308) wurden in 20 ml Pyridin in Gegenwart von 1,6 g (0,015 m) Triäthylamin und 1,5 g (0,015 m) Essigsäureanhydrid während 1 Stunde unter Rückfluss erhitzt. Durch Abkühlen wurden 1,2 g Produkt isoliert, welches nach Umkristallisieren aus Methanol einen Schmelzpunkt von 234-238°C (Zers.) besitzt. $\lambda_{max}$: 705 nm .

Beispiel 13:

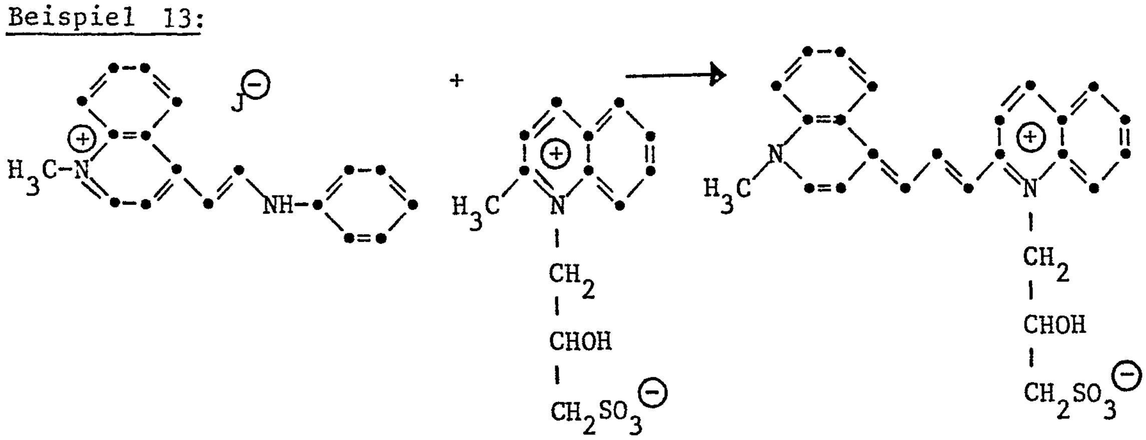

(308) (208) (111)

Je 0,005 m der Verbindungen der Formeln (208) und (308) gelöst in 20 ml Pyridin wurden in Gegenwart von 2,2 ml (0,015 m) Triäthylamin und 1,4 ml (0,015 m) Essigsäureanhydrid während 39 Stunden bei 20°C gerührt. Das Rohprodukt wurde anschliessend abgesaugt und in Methanol umkristallisiert. Der Schmelzpunkt der so erhaltenen Verbindung der Formel (111) betrug 261-265°C. $\lambda_{max}$: 657 nm.

Beispiel 14:

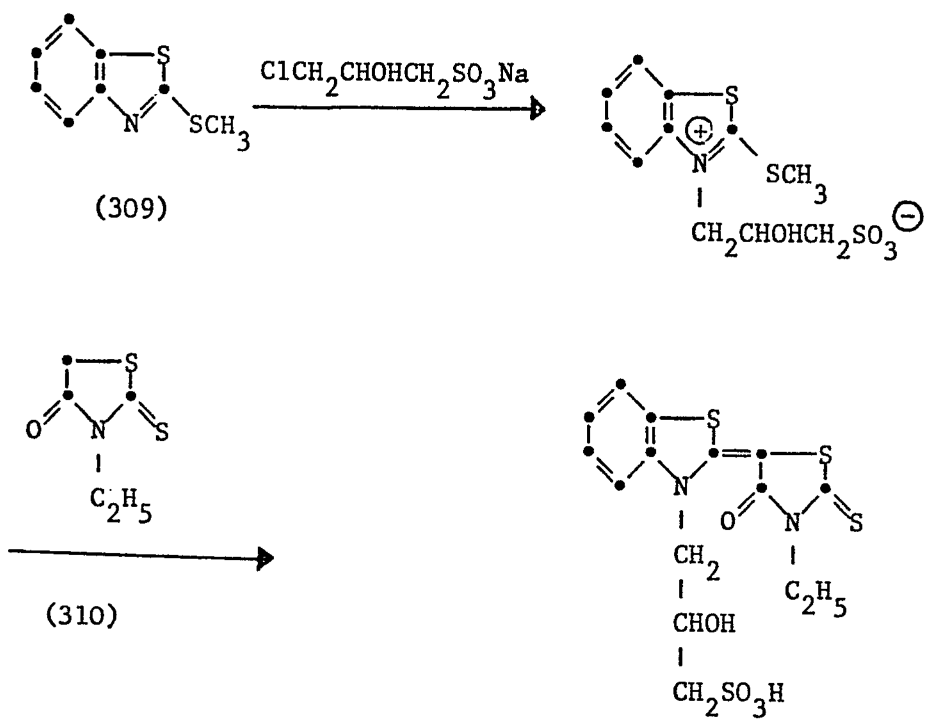


(309) (201)

(310)

(112)

0,025 m der Verbindung der Formel (309) und 0,030 m der Verbindung der Formel (5) wurden 4 Stunden auf 180°C erhitzt. Die viskose Reaktionsmasse wurde in 100 ml Pyridin suspendiert und nach Zugabe von 0,025 m der Verbindung der Formel (310) und 0,075 m Triäthylamin 30 Minuten gekocht. Das Reaktionsgemisch wurde auf -20°C abgekühlt. Nach Abtrennen des Niederschlags wurden dem Filtrat 400 ml Diäthyläther hinzugefügt, wobei das Rohprodukt ausgefällt wurde. Nach Umkristallisieren des Rohprodukts aus Isopropanol und anschliessend aus Methanol erhielt man 0,9 g Verbindung der Formel (112) vom Schmelzpunkt 250-254°C. $\lambda_{max}$: 425 nm.

Anwendungsbeispiele:

Beispiel 15: Eine Silberbromojodidemulsion mit 2,6 Mol-% Jodid und oktaedrischen Zwillingskristallen mit einer mittleren Kristallgrösse von 0,48 µm (berechnet als volumenäquivalente Kubenkantenlänge) wird mit 200 mg der Verbindung der Formel (105) aus Beispiel 5 pro Mol Silberhalogenid sensibilisiert.

Zum Vergleich wird dieselbe Emulsion mit 200 mg pro Mol Silberhalogenid des Sensibilisators der Formel

(400) 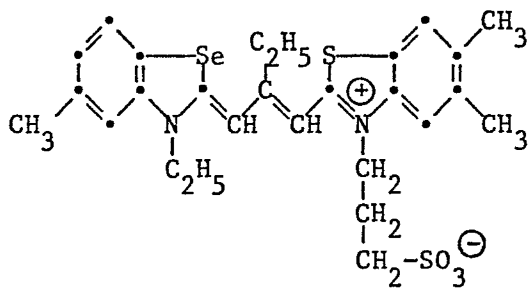

sensibilisiert.

Beide Emulsionen werden in üblicher Weise auf einen transparenten Schichtträger vergossen, belichtet und verarbeitet. Man erhält die folgenden sensitometrischen Daten:

| Sensibilisator der Formel | (105) | (400) |
|---|---|---|
| rel. log. Empfindlichkeit bei 50% der Maximaldichte | -0,16 | -0,02 |
| Sensibilisierungsmaximum | 650 nm | 650 nm |

Der Sensibilisator der Formel (105) ergibt somit bei gleichem Sensibilisierungsbereich eine um 0,14 log. Einheiten grössere Empfindlichkeit als der Vergleichssensibilisator der Formel (400).

Patentansprüche:

1. Verbindungen der Formel

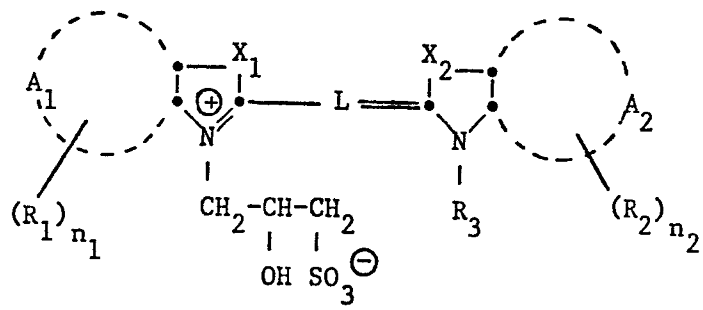

,

worin

$X_1$ und $X_2$ unabhängig voneinander $-CR_2-$, -NR-, -O-, -S-, -Se-, $C_2H_4-$ oder $-C_2H_2-$ sind, L -CH= oder -CH=CR-CH=, worin R Wasserstoff oder Alkyl mit 1 bis 4 Kohlenstoffatomen ist, $R_3$ Alkyl mit 1 bis 4 Kohlenstoffatomen, Benzyl oder $-CH_2CHOHCH_2SO_3^{\ominus}$ ist, $A_1$ und $A_2$ unabhängig voneinander die zur Vervollständigung eines ungesättigten 5- oder 6-gliedrigen homo- oder heterocyclischen Ringes erforderlichen Atome darstellen, $R_1$ und $R_2$ unabhängig voneinander gegebenenfalls mit Halogen substituiertes Alkyl mit 1 bis 4 Kohlenstoffatomen, Alkoxy mit 1 bis 4 Kohlenstoffatomen, Phenyl, Cyano, Nitro oder Halogen, und $n_1$ und $n_2$ unabhängig voneinander 0, 1 oder 2 sind,
wobei $R_3$ nicht $-CH_2CHOHCH_2SO_3^{\ominus}$ ist, wenn $X_1$ und $X_2$ Schwefel sind, und $n_1$ verschieden von $n_2$ ist, wenn $X_1$ Schwefel und $X_2$ Selen ist.

2. Verbindungen nach Anspruch 1, dadurch gekennzeichnet, dass $A_1$ und $A_2$ unabhängig voneinander die zur Vervollständigung eines Benzol-, Naphthol-, Pyrazin- oder Chinoxalinringes erforderlichen Atome darstellen, $R_1$ und $R_2$ unabhängig voneinander Methyl, Trifluormethyl, Methoxy, Phenyl, Cyano, Nitro, Fluor oder Chlor sind, und $X_1$, $X_2$, L, $R_3$, $n_1$ und $n_2$ die in Anspruch 1 angegebenen Bedeutungen haben.

3. Verbindungen nach Anspruch 2, dadurch gekennzeichnet, dass $X_1$ und $X_2$ unabhängig voneinander -S- oder -Se- sind, L -CH= oder -CH=CR-CH=, worin R Wasserstoff, Methyl oder Aethyl ist, $R_3$ Methyl, Aethyl oder $-CH_2CHOHCH_2SO_3^{\ominus}$ ist, $A_1$ und $A_2$ die zur Vervollständigung eines Benzolrestes notwendigen Atome darstellen, $R_1$ und $R_2$ Methyl sind, und $n_1$ und $n_2$ die in Anspruch 2 angegebenen Bedeutungen haben.

4. Verbindungen nach Anspruch 3 der Formeln

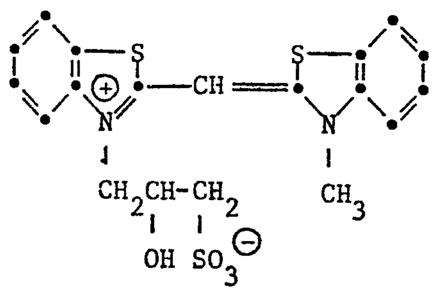

,

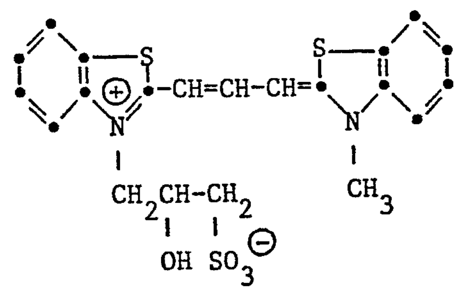

,

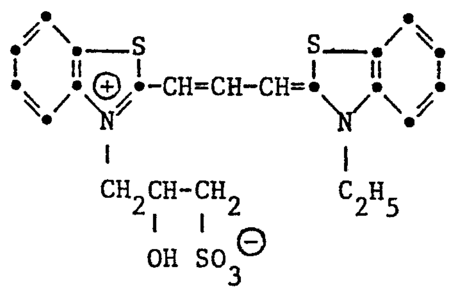

,

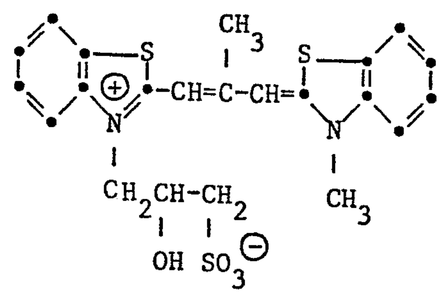

und

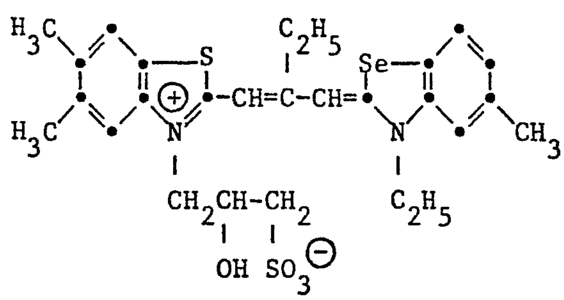

.

5. Verbindungen nach Anspruch 2, dadurch gekennzeichnet, dass $X_1$ und $X_2$ unabhängig voneinander $-C(CH_3)_2-$, $-N(C_2H_5)-$ oder -O- sind, L -CH= oder -CH=CH-CH=, $R_3$ Aethyl oder $-CH_2CHOHCH_2SO_3^{\ominus}$ ist, $A_1$ und $A_2$ die zur Vervollständigung eines Benzolringes erforderlichen Atome darstellen, $R_1$ und $R_2$ Trifluormethyl, Phenyl oder Chlor sind, und $n_1$ und $n_2$ die in Anspruch 2 angegebenen Bedeutungen haben.

6. Verbindungen nach Anspruch 5 der Formeln

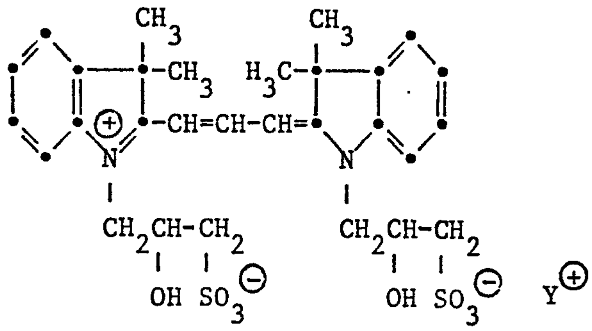

,

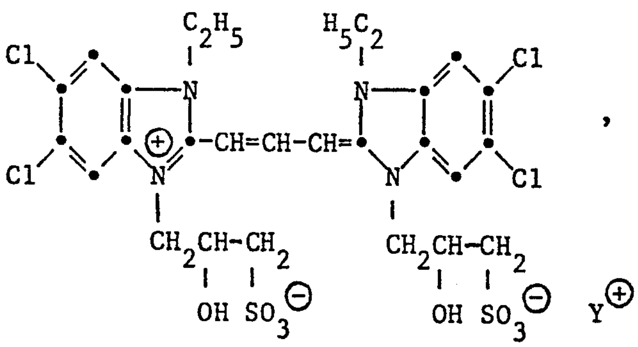

,

worin Y Wasserstoff oder Natrium ist,

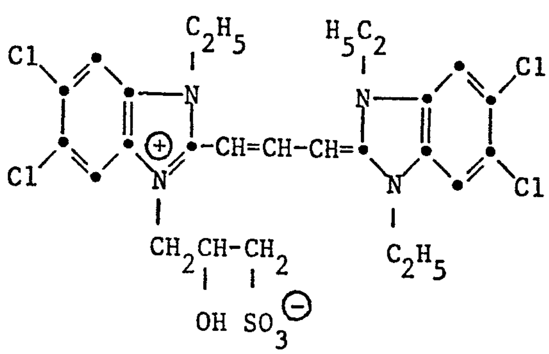

und

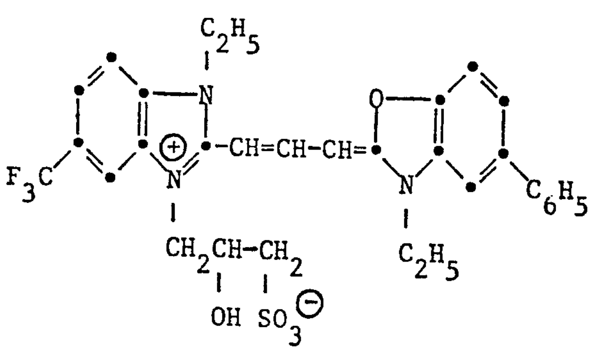

.

7. Verbindungen der Formel

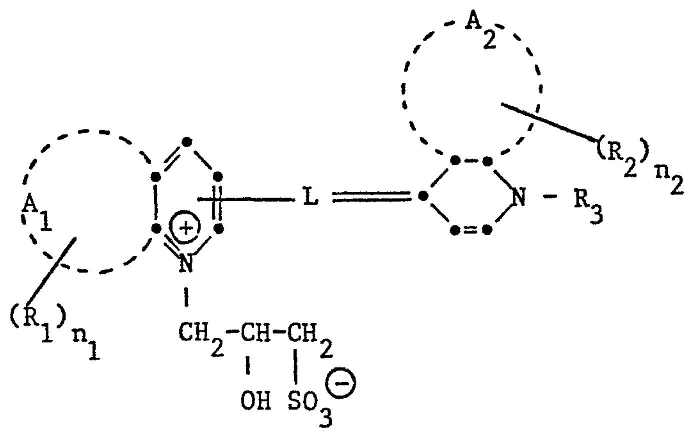

,

worin

L -CH=CR-CH=, worin R Wasserstoff, Methyl oder Aethyl ist, $R_3$ Methyl oder Aethyl ist, $A_1$ und $A_2$ unabhängig voneinander die zur Vervollständigung eines ungesättigten 5- oder 6-gliedrigen homo- oder heterocyclischen Ringes erforderlichen Atome darstellen, $R_1$ und $R_2$ unabhängig voneinander Methyl, Phenyl, Chlor oder Trifluormethyl und $n_1$ und $n_2$ unabhängig voneinander 0, 1 oder 2 sind.

8. Verbindungen nach Anspruch 7 der Formel

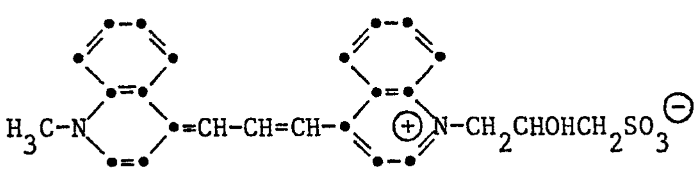

und

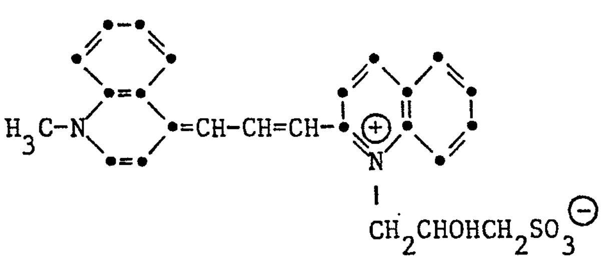

.

9. Verbindungen der Formel

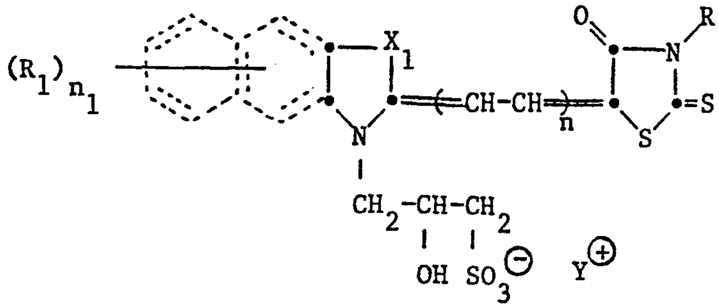

,

worin

$X_1$ $-CR_2-$, -NR- oder -S-, R Wasserstoff oder Alkyl mit 1 bis 4 Kohlenstoffatomen, $R_1$ Methyl oder Phenyl, $Y^{\oplus}$ ein Kation, $n_1$ 0, 1 oder 2 und n 0 oder 1 ist.

10. Verbindung nach Anspruch 9 der Formel

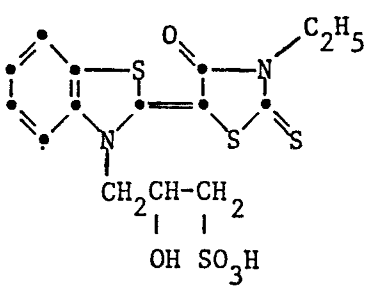

.

11. Verfahren zur Herstellung der Verbindungen nach Anspruch 1, dadurch gekennzeichnet, dass man Verbindungen der Formel

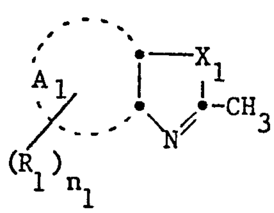

,

worin $X_1$, $A_1$, $R_1$ und $n_1$ die in Anspruch 1 angegebenen Bedeutungen haben, mit $ClCH_2$-CHOH-$CH_2SO_3Na$ quaterniert, die Quaternierungsprodukte mit Verbindungen der Formel

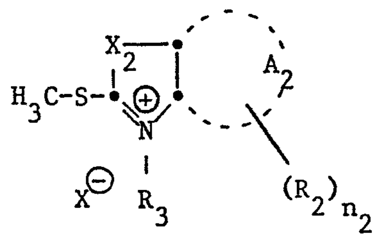

oder

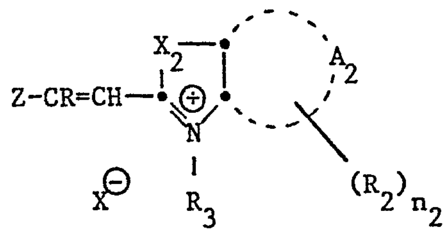

,

worin $X_2$, $A_2$, R, $R_2$, $R_3$ und $n_2$ die in Anspruch 1 angegebenen Bedeutungen haben, Z eine Abgangsgruppe und $X^{\ominus}$ ein Anion ist, weiter umsetzt und das Produkt isoliert.

12. Verfahren nach Anspruch 11, dadurch gekennzeichnet, dass die Quaternierung in der Schmelze bei 170 bis 190°C durchgeführt wird.

13. Verfahren nach Anspruch 12, dadurch gekennzeichnet, dass die Quaternierung in Nitrobenzol, Sulfolan oder Methoxypropionitril bei 140 bis 170°C durchgeführt wird.

14. Verfahren zur Herstellung der Verbindungen nach Anspruch 7, dadurch gekennzeichnet, dass man Verbindungen der Formel

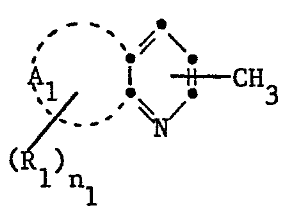

worin $A_1$, $R_1$ und $n_1$ die in Anspruch 7 angegebenen Bedeutungen haben, mit $ClCH_2$-CHOH-$CH_2SO_3Na$ quaterniert, die Quaternierungsprodukte mit Verbindungen der Formel

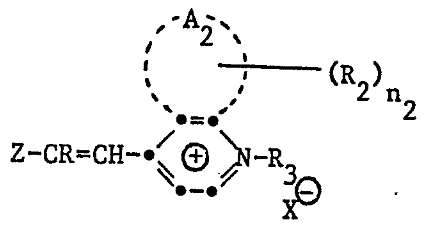

,

worin $A_2$, R, $R_2$, $R_3$ und $n_2$ die in Anspruch 7 angegebenen Bedeutungen haben, Z eine Abgangsgruppe und $X^{\ominus}$ ein Anion ist, weiter umsetzt und das Produkt isoliert.

15. Verfahren zur Herstellung der Verbindungen nach Anspruch 9, dadurch gekennzeichnet, dass man Verbindungen der Formel

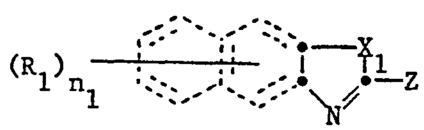

,

worin $X_1$, $R_1$ und $n_1$ die in Anspruch 9 angegebene Bedeutung haben und Z eine Abgangsgruppe ist, mit $ClCH_2-CHOH-CH_2SO_3Na$ quaterniert, die Quaternierungsprodukte mit Verbindungen der Formel

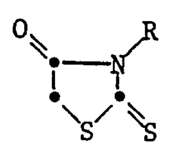

,

worin R Wasserstoff oder Alkyl mit 1 bis 4 Kohlenstoffatome ist, weiter umsetzt und das Produkt isoliert.

16. Die nach dem Verfahren nach einem der Ansprüche 11, 14 oder 15 erhältlichen Verbindungen.

17. Verwendung der Verbindungen nach einem der Ansprüche 1 bis 10 als Sensibilisatoren in photographischen Materialien.

18. Verwendung nach Anspruch 17, dadurch gekennzeichnet, dass die photographischen Materialien Silberfarbbleichmaterialien oder Materialien für chromogene Entwicklung sind.

19. Photographische Materialien, dadurch gekennzeichnet, dass sie eine Verbindung nach einem der Ansprüche 1 bis 10 als Sensibilisator enthalten.

20. Photographische Materialien nach Anspruch 19, dadurch gekennzeichnet, dass sie Silberfarbbleichmaterialien oder farbphotographische Materialien für chromogene Entwicklung sind und eine Verbindung nach einem der Ansprüche 1 bis 10 als Sensibilisator enthalten.

FO 7.1/KH/gs*